# FASCICULE DE BREVET EUROPEEN

(11) **EP 0 578 518 B1**
(45) Date de publication et mention de la délivrance du brevet: **30.09.1998**
(21) Numéro de dépôt: 93401400.2
(22) Date de dépôt: 02.06.1993
(51) Int. Cl.: B22F 7/08, B22F 5/04

(54) **Procédé de formation d'un insert sur une pièce à revêtir en acier ou en alliage de titane**
Verfahren zur Herstellung eines Einsatzes auf einem zu beschichtenden Formkörper aus Stahl oder aus Titanlegierung
Process for preparing an insert on an article to be coated, the article being from steel or titanium alloy

(30) Priorité: 05.06.1992 FR 9206861
(43) Date de publication de la demande: 12.01.1994
(73) Titulaire: GEC ALSTHOM ELECTROMECANIQUE SA, 75016 Paris (FR)
(72) Inventeur: Coulon, Andre, F-90160 Bessoncourt (FR)
(74) Mandataire: Fournier, Michel

(56) Documents cités:
- EP-A- 0 151 103
- EP-A- 0 401 187
- DE-A- 2 133 300
- PATENT ABSTRACTS OF JAPAN vol. 13, no. 170 (M-817)21 Avril 1989 & JP-A-10 005 701 (KUBOTA) 10 Janvier 1989
- PATENT ABSTRACTS OF JAPAN vol. 4, no. 105 (M-023)26 Juillet 1980 & JP-A-55 062 103 (KOBE STEEL) 10 Mai 1980

## Description

La présente invention concerne la pose d'un revêtement protecteur, généralement en matériau dur, pour pallier les effets d'usure tels que l'abrasion, le frottement , l'érosion, sur des composants mécaniques particulièrement sollicités tels que des aubes de turbine et des organes d'admission de centrales énergétiques.

Selon un procédé connu du document EP-A-0151103 (exemple 3) on connaît un procédé de fabrication d'un élément de protection sur une pièce métallique en acier martensitique ou en alliage de titane en utilisant une capsule métallique dans lequel on remplit le logement entre la capsule et la pièce d'une poudre métallique ou céramique dont la composition correspond à celle de l'élément de protection souhaité, on obture les extrémités du logement, on introduit la pièce avec la capsule remplie dans un four à pression isostatique sous atmosphère contrôlée, la pression et la température étant choisies pour que la poudre soit compactée sur place, on refroidit la pièce puis on enlève la capsule avant de donner sa forme finale à la pièce munie de son revêtement.
. On a remarqué que le revêtement fabriqué avec de la poudre comporte une proportion importante de gaz, oxygène et azote. Or ces gaz ont tendance à émigrer dans le substrat et à le fragiliser;
. Dans le procédé selon l'invention où le revêtement est constitué par un insert, on vient fixer mécaniquement un feuillard métallique qui déborde sur la partie de la pièce à renforcer ledit feuillard ayant une épaisseur de 0,1 à 0, 3 mm et étant constitué d'éléments compatibles avec la pièce et susceptibles de générer lors de l'opération de compactage des composés à phases intermétalliques, formant barrière entre insert et pièce et dont le point de fusion est supérieur de 20 à 50°C à la température de compactage utilisée.
et en ce que les bords de la capsule sont ensuite fixés sur les bords du feuillard.

La modification de la structure du feuillard pendant le traitement par création de composants à phases intermétalliques permet d'obtenir une barrière contre la diffusion des gaz de l'insert vers la pièce.

Lorsque la pièce a revêtir est en acier martensitique le feuillard peut être constitué de cuivre pur, de nickel avec de l'indium ou de nickel avec de l'étain. Il peut également être constitué d'un alliage de deux ou trois des éléments suivants Ni, Cu, Al de préférence 70 % Ni, 15 % Cu, 15 % Al.

Lorsque la pièce est en alliage de titane le feuillard est constitué de titane avec de l'indium ou d'un alliage de deux ou de trois des éléments suivants Ni, Ti, Al de préférence 50 % Al, 25% Ni, 25 % Ti,

La pièce à revêtir sera par exemple une aube de turbine.

L'invention va maintenant être décrite plus en détail en se référant à un mode de réalisation particulier cité à titre d'exemple non limitatif et représenté par des dessins annexés.

La figure 1 représente une aube munie d'une capsule.

La figure 2 représente en coupe l'aube munie de son insert.

Le procédé selon l'invention est décrit dans le cas de revêtement par un insert 1 du bord d'attaque 1 d'une aube 2 de turbine en acier martensitique soumis à l'érosion.

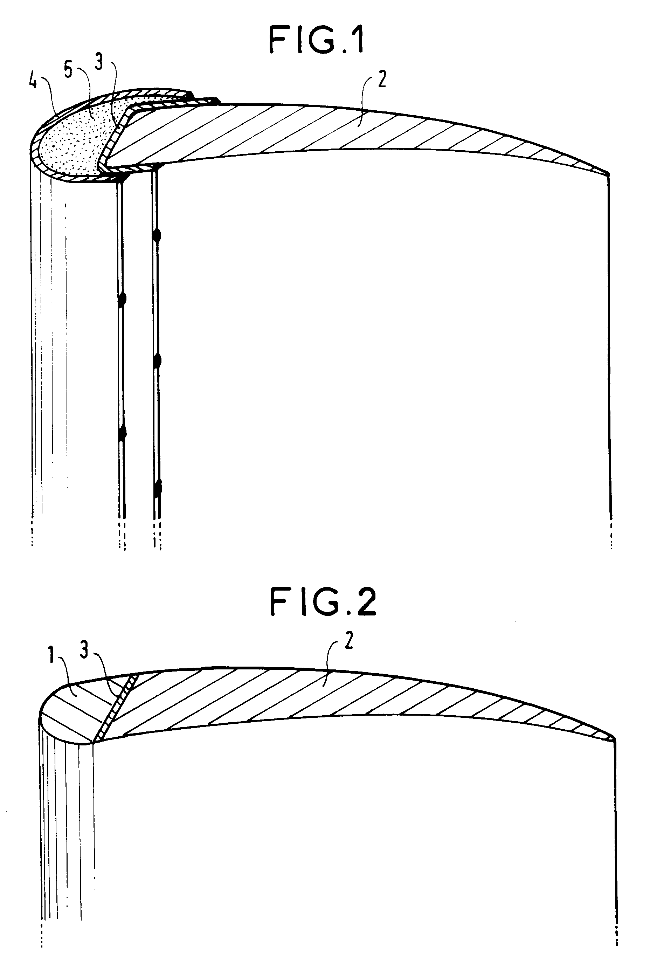

La surface du bord d'attaque est meulée de façon à présenter un méplat (voir figure 1).

On ajoute par simple pression d'un feuillard 3 sur toute la zone à protéger en prévoyant des débords de 5 mm sur tout son périmètre. Le feuillard 3 est fixé à l'aube par agrafage par points de soudure ou encore par voie mécanique (pinces en mobybdène par exemple).

Le feuillard type brasure à haute température a une épaisseur comprise entre 0,1 et 0,3 mm et est constitué d'un alliage Ni, Cu, Al (70 % Ni, 15 % Cu, 15 % Al). La température de fusion peut être comprise entre 1220°C et 1260°C.

Ensuite on fixe une capsule 4 de paroi d'épaisseur fine (< 3/10^{ème} mm) qu'on agrafe sur la partie débordante du feuillard 3.

La capsule 4 présente la forme du profil terminé du bord d'attaque. Le logement 5 entre capsule 4 et feuillard 3 a une épaisseur qui peut aller de quelques 1/10 ème de mm à quelques mm. On introduit ensuite dans le logement 5 de la poudre métallique (alliages mono ou polyphasés) puis on obture les extrémités de la capsule 4.

L'aube 2 est ensuite introduite dans un four à pression isostatique à atmosphère contrôlée pour procéder à un compactage à chaud et sous pression isostatique (Hot Isostatic Pressing). La pression est maintenue constante à 1500 atm pour l'acier et 1800 atm pour l'alliage de titane et la température maintenue également constante à 1200°C pour l'acier et 1050°C pour l'alliage de titane, 20° à 60°C en dessous de la température de fusion du feuillard 3, pendant une durée de 120 minutes.

L'aube 2 est ensuite sortie du four et après refroidissement on enlève la capsule 4.

On élimine par meulage au voisinage toutes les traces des agrafages et des excédants de feuillard 3. (voir figure 2).

On introduit alors l'aube 2 ainsi munie de son insert dans un outillage final de préférence isotherme de calibrage.

L'aube subit ensuite la fin de la gamme opératoire normale (traitements thermiques, finition etc...).

L'opération de calibrage qui permet une mise à la cote dans des conditions acceptables de déformation (écrouissage) et sans reprise d'usinage n'est pas obligatoire, on peut lui préférer une opération d'usinage à postériori.

Lorsque la pièce à revêtir est en acier on pourra choisir un insert en matériau dur tel que la stellite, la poudre remplissant la capsule étant alors constitué d'alliages à base de cobalt noyés dans une matrice.

Cette pièce en acier de turbine à vapeur peut non seulement être une aube et ou pourra revêtir le bord d'attaque de l'aileron ou des chapeaux mais également un guide ou un siège d'organe d'admission.

## Revendications

1. Procédé de fabrication d'un revêtement de protection (1) sur une pièce métallique (2) en acier martensitique ou en alliage de titane en utilisant une capsule métallique (4) dans lequel on remplit le logement (5) entre la capsule (4) et la pièce (2) d'une poudre métallique ou céramique dont la composition correspond à celle de l'insert souhaité (1), on obture les extrémités du logement (5), on introduit la pièce (2) avec la capsule (4) remplie dans un four à pression isostatique sous atmosphère contrôlée, la pression et la température étant choisies pour que la poudre soit compactée sur place, on refroidit la pièce (2) puis on enlève la capsule (4) avant de donner sa forme finale à la pièce (2) munie de l'insert (1).
caractérisé en ce que le revêtement de protection est un insert (1) destiné à protéger une partie limitée de la pièce métallique (2) et en ce qu'on vient fixer mécaniquement un feuillard métallique (3) qui déborde sur la partie de la pièce (2) à renforcer, ledit feuillard (3) ayant une épaisseur de 0,1 à 0,3mm et étant constitué d'éléments compatibles avec la pièce (2) et susceptibles de générer lors de l'opération de compactage des composés à phases intermétalliques, formant barrière entre insert (1) et pièce (2) et dont le point de fusion est supérieur de 20 à 50°C à la température de compactage utilisée.
et en ce que les bords de la capsule (4) sont ensuite fixés sur les bords du feuillard (3).

2. Procédé selon la revendication 1 pour une pièce (2) en acier martensitique caractérisé en ce que le feuillard (3) est constitué de cuivre pur, de nickel avec de l'indium ou de nickel avec de l'étain.

3. Procédé selon la revendication pour une pièce (2) en acier martensitique caractérisé en ce que le feuillard (3) est constitué d'un alliage de deux ou des trois des éléments suivants Ni, Cu, Al.

4. Procédé en ce que la revendication 3 caractérisé en ce que l'alliage est constitué de 70 % Ni, 15 % Cu, 15 % Al.

5. Procédé selon la revendication 1 pour une pièce (2) en alliage en titane caractérisé en ce que le feuillard (3) est constitué de Titane avec de l'indium.

6. Procédé selon la revendication 1 pour pièce (2) en alliage en titane caractérisé en ce que le feuillard (3) est constitué d'un alliage de deux ou de trois des éléments suivants Ni, Ti, Al.

7. Procédé selon la revendication 6 caractérisé en ce que l'alliage du feuillard (3) est constitué de 50 % Al, 25 % Ni, 25 % Ti.

## Claims

1. A method of manufacturing a protective cladding (1) on a metal part (2) made of martensitic steel or of titanium alloy, by using a metal capsule (4) in which the space (5) between the capsule (4) and the part (2) is filled with a metal or ceramic powder whose composition corresponds to the composition desired for the insert (1), the ends of the space (5) are closed, the part (2) together with the filled capsule (4) are inserted in an isostatic pressing oven under a controlled atmosphere, the pressure and the temperature being selected so that the powder is pressed in situ, the part (2) is cooled and then the capsule (4) is removed before final shaping of the part (2) fitted with the insert (1),
characterized in that the protective cladding is an insert (1) designed to protect a limited portion of the metal part (2) and in that an overlapping metal foil (3) is mechanically fixed on the portion of the part (2) that is to be clad, said foil (3) having a thickness lying in the range 0.1 mm to 0.3 mm and being constituted by elements that are compatible with the part (2) and that are suitable during the pressing operation for generating intermetallic phase compounds that form a barrier between the insert (1) and the part (2), the foil having a melting point that is 20°C to 50°C greater than the pressing temperature used; and
in that the edges of the capsule (4) are subsequently fixed to the edges of the foil (3).

2. A method according to claim 1 for a part (2) of martensitic steel, characterized in that the foil (3) is made of pure copper, of nickel with indium, or of nickel with tin.

3. A method according to claim 1, for a part (2) of martensitic steel, characterized in that the foil (3) is constituted by an alloy of two or three of the following elements: Ni, Cu, Al.

4. A method according to claim 3, characterized in that the alloy is constituted by 70% Ni, 15% Cu, 15% Al.

5. A method according to claim 1 for a part (2) made of titanium alloy, characterized in that the foil (3) is constituted by titanium with indium.

6. A method according to claim 1 for a part (2) made of titanium alloy, characterized in that the foil (3) is constituted by an alloy of two or three of the following elements: Ni, Ti, Al.

7. A method according to claim 6, characterized in that the alloy of the foil (3) is constituted by 50% Al, 25% Ni, 25% Ti.

## Patentansprüche

1. Verfahren zum Herstellen eines Schutzüberzuges (1) an einem Metallkörper (2) aus martensitischem Stahl oder Titanlegierung unter Verwendung einer Metallkapsel (4), bei dem die Aussparung (5) zwischen der Kapsel (4) und dem Körper (2)mit einem Metall- oder Keramikpulver gefüllt wird, dessen Zusammensetzung der des gewünschten Einsatzes (1) entspricht, die Enden der Aussparung (5) verschlossen werden und der Körper (2) mit der gefüllten Kapsel (4) in einen Ofen mit isostatischem Druck unter geregelter Atmosphäre gegeben wird, wobei Druck und Temperatur so gewählt sind, daß das Pulver am Ort kompaktiert wird, der Körper (2) abgekühlt wird und dann die Kapsel (4) entfernt wird, bevor der mit seinem Überzug (1) versehene Körper (2) seine endgültige Form bekommt
dadurch gekennzeichnet, daß der Schutzüberzug ein Einsatz (1) ist, der dazu bestimmt ist, einen begrenzten Bereich des Metallkörpers (2) zu schützen, und daß ein Metallband (3) mechanisch befestigt wird, das über den Rand des zu verstärkenden Körpers (2) übersteht, daß das Band (3) eine Dicke von 0,1 bis 0,3 mm hat und aus Elementen besteht, die mit dem Körper (2) verträglich sind und in der Lage sind, bei der Kompaktierungsoperation Elemente mit intermetallischen Phasen zu bilden, die eine Sperre zwischen dem Einsatz (1) und dem Körper (2) bilden und deren Schmelzpunkt 20 bis 50°C höher als die verwendete Kompaktierungstemperatur ist,
und daß die Ränder der Kapsel (4) anschließend an den Rändern des Bandes (3) befestigt werden.

2. Verfahren nach Anspruch 1 für einen Körper (2) aus martensitischem Stahl, dadurch gekennzeichnet, daß das Band (3) aus reinem Kupfer, Nickel mit Indium oder Nickel mit Zinn besteht.

3. Verfahren nach Anspruch 1 für einen Körper (2) aus martensitischem Stahl, dadurch gekennzeichnet, daß das Band (3) aus einer Legierung von zwei oder drei der folgenden Elemente: Ni, Cu, Al besteht.

4. Verfahren nach Anspruch 3, dadurch gekennzeichnet, daß die Legierung aus 70% Ni, 15% Cu und 15% Al besteht.

5. Verfahren nach Anspruch 1 für einen Körper (2) aus Titanlegierung, dadurch gekennzeichnet, daß das Band aus Titan mit Indium besteht.

6. Verfahren nach Anspruch 1 für einen Körper (2) aus Titanlegierung, dadurch gekennzeichnet, daß das Band (3) aus einer Legierung von zwei oder drei der folgenden Elemente: Ni, Ti, Al besteht.

7. Verfahren nach Anspruch 6, dadurch gekennzeichnet, daß die Legierung des Bandes aus 50% Al, 25% Ni und 25% Ti besteht.
